# EUROPEAN PATENT SPECIFICATION

(11) **EP 1 477 334 B1**
(45) Date of publication and mention of the grant of the patent: **14.03.2018**
(21) Application number: 03701826.4
(22) Date of filing: 21.01.2003
(51) Int. Cl.: B60C 11/01, B60C 11/18, B60C 11/00, B60C 13/00, B29D 30/72, B29D 30/08

(54) **PNEUMATIC TIRE AND METHOD OF MANUFACTURING THE TIRE**
LUFTREIFEN UND VERFAHREN ZUR HERSTELLUNG DES REIFENS
PNEU ET SON PROCEDE DE PRODUCTION

(30) Priority: 21.01.2002 JP 2002011444
(43) Date of publication of application: 17.11.2004
(73) Proprietor: Bridgestone Corporation, Tokyo 104-8340 (JP)
(72) Inventor: MATSUNAGA, Hiroo, c/o BRIDGESTONE CORPORATION, Tokyo 104-8340 (JP)
(74) Representative: Oxley, Robin John George
(86) International application number: PCT/JP2003/000480
(87) International publication number: WO 2003/061992

(56) References cited:
- EP-A2- 0 962 340
- EP-A2- 1 197 354
- DE-A1- 3 914 540
- GB-A- 1 372 858
- JP-A- 7 257 116
- JP-A- 7 266 452
- JP-A- 10 217 720
- JP-A- 55 164 509
- JP-A- 57 087 703
- US-A- 5 088 537
- US-A- 5 746 860

## Description

### Technical Field

The present invention relates to a pneumatic tire including a side rubber provided between a tread rubber and a side wall rubber, and to a production method of the pneumatic tire.

### Background Art

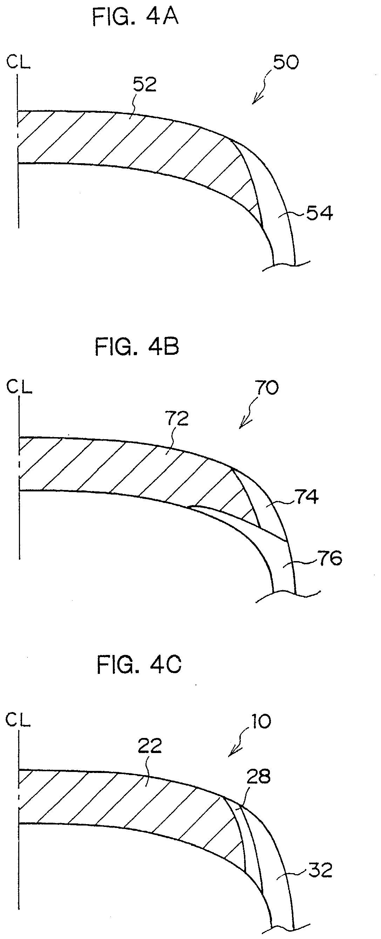

Examples of conventional pneumatic tires include a tire having a structure as shown in Fig. 4B.

In such a pneumatic tire 70, a side wall rubber 76 is press-attached to each of side portions of a carcass (not shown), and, in a sectional view in the widthwise direction of the tire, each outer end portion of the side wall rubber 76 in a radial direction of the tire is bent inside in a widthwise direction of the tire.

A tread rubber 72 is press-attached, via a belt (not shown), to a tread side of the carcass, which is on the outer side of the carcass in the radial direction of the tire. Each outer end portion of the tread rubber 72 in the widthwise direction of the tire is positioned on the outer side, in the radial direction of the tire, of each outer end portion (i.e., bent portion) of the side wall rubber 74 in the radial direction of the tire.

In other words, each outer end portion of the tread rubber 72 in the widthwise direction of the tire is disposed on each outer end portion (i.e., bent portion) of the side wall rubber 74 in the radial direction of the tire.

Further, a side rubber 74 is press-attached on the outer side, in the widthwise direction of the tire, of each tire-widthwise-direction outer end portion of the tread rubber 72. Physical properties or composition of the side rubber 74 is the same as or similar to that of the side wall rubber 76.

In a production method of the above-described pneumatic tire 70, initially, in first molding, an unvulcanized inner liner rubber (not shown) is set on a rotary drum (not shown), and a carcass is press-attached to the inner liner rubber.

After that, a bead filler including a bead core is attached at each end of the carcass, and the ends of the carcass in a tire widthwise direction of the drum are bent on the outer side in the radial direction of the tire, so as to mold bead sections.

Then, an unvulcanized side wall rubber 76 is press-attached to each of side portions of the carcass.

Subsequently, in second molding, the diameter of the rotary drum is expanded so that the carcass is toroidally deformed. Thereafter, a belt is press-attached to the carcass from the outer side in the radial direction of the tire, and an unvulcanized tread rubber 72 integrated with an unvulcanized side rubber 74 at each end thereof is further press-attached to the belt and the carcass.

The tread rubber 72 and the side rubber 74 to be used are integrally extruded by a dual tuber (not shown) which is conventionally known.

The pneumatic tire 70 is produced by the above-described method.

In the above-described production method, since the tread rubber 72 and the side rubber 74 are press-attached from the outer side in the radial direction of the tire after the side wall rubber 76 has been press-attached, production process is relatively simplified. Therefore, this production method has great advantages in improved production efficiency and reduced production cost. Accordingly, this production method is generally used for producing the pneumatic tire 70.

In general, physical properties or composition of the tread rubber 72 is significantly different from that of the side rubber 74. However, since the tread rubber 72 and the side rubber 74 to be used are integrated by a dual tuber in this production method, durability of an interface therebetween is improved. Thus, this production method has another advantage that separation of the tread rubber 72 and the side rubber 74 from each other (i.e., cracks) at the interface therebetween, which separation occurs due to the difference of physical properties or composition therebetween, is less likely to occur.

However, an interface between the side rubber 74 and the side wall rubber 76 appears at a side surface side of the tire, and the side surface portions of the tire are high distortion portions where bending deformation of the tire is relatively large while the vehicle is running. Therefore, this production method has a problem that separation of the side rubber 74 and the side wall rubber 76 from each other (i.e., cracks) at the interface therebetween may occur.

The problem described above is not solved even when the side rubber 74 and the side wall rubber 76 have the same or similar physical properties or composition.

Thus, in view of the above facts, the present invention has an object of providing a pneumatic tire in which not only separation of the tread rubber and the side rubber from each other (i.e., cracks) at the interface therebetween but also separation of the side rubber and the side wall rubber from each other (i.e., cracks) at the interface therebetween can be prevented, and a production method of the pneumatic tire. The document DE-A-3914540 discloses a tire according to the preamble of claim 1. Reference is also made to document US5088537.

### Disclosure of the Invention

The pneumatic tire according to a first aspect of the invention is a pneumatic tire as claimed in claim 1.

Next, the operation and effects of the pneumatic tire according to claim 1 will be described.

In the pneumatic tire of the present invention, a tread section is formed by a tread rubber, which is disposed on the outer side of a carcass in a radial direction of the tire. Further, a portion of each shoulder section is formed by a side rubber, which side rubber is attached to each outer end portion of the tread rubber in a widthwise direction of the tire. Furthermore, each side wall section and a portion of each shoulder section are formed by a side wall rubber, the side wall rubber and the side rubber are a blend of 0 per hundred rubber (PHR) styrene-butadiene rubber (SBR), 50 PHR natural rubber (NR), and 50 PHR polybutadiene rubber (BR), the tread rubber (22) is a blend of 100 PHR SBR, 0 PHR NR and 0 PHR BR; and the Shore hardnessses of the tread rubber (22), side wall rubber (32) and side rubber (28) are 68, 55 and 55 respectively, which side wall rubber is disposed on the outer side of the carcass in the widthwise direction of the tire, and each outer end portion of the side
wall rubber in the radial direction of the tire is attached to each outer end portion of the side rubber in the widthwise direction of the tire.

According to the pneumatic tire of the present invention, an interface between the side rubber and the side wall rubber appears, not at a side surface side of the tire, but at a ground-contacting side thereof.

Here, while the vehicle is running, bending deformation of the tire is larger at the side surface sides of the tire than at the ground-contacting side thereof. Namely, the side surface portions of the tire are high distortion portions.

Therefore, the pneumatic tire of the present invention is structured such that the interface between the side rubber and the side wall rubber appears, not at the side surface side of the tire, but at the ground-contacting side (i.e., low distortion portion) thereof. As a result, the bending deformation acting at the interface between the side rubber and the side wall rubber can be reduced, and thereby separation of the side rubber and the side wall rubber from each other (i.e., cracks) at the interface can be prevented. In other words, the interface between the side rubber and the side wall rubber is positioned at the ground-contacting portion of the tire, which portion is a low distortion portion, so that separation of the side rubber and the side wall rubber from each other (i.e., cracks) at the interface can be prevented.

Further, a possibility that
the side rubber and the side wall rubber are separated from each other (i.e., a possibility of crack generation) at the interface therebetween can be significantly lowered.

Herein, the expression that two substances have "the same physical properties" means that the two substances have the same Shore hardness.

The expression that two substances have "similar physical properties" means that the difference in Shore hardness between the two substances is not more than 5, preferably is less than 5, and more preferably is not more than 3.

Further, the expression that two substances have "the same composition" means that the two substances have the same blend ratio of SBR (styrene-butadiene rubber)/NR (natural rubber)/BR (polybutadiene rubber).

The expression that two substances have "similar composition" means that the difference in blend ratio of NR (natural rubber) between the two substances is not more than 25 PHR.

In general, physical properties or composition of the tread rubber is significantly different from that of the side rubber. Therefore, separation of the tread rubber and the side rubber from each other at the interface therebetween tends to occur.

Thus, in the present invention, the tread rubber and the side rubber to be used are integrally extruded in the unvulcanized state by an extruder. Accordingly, as compared with a case in which the tread rubber and the side rubber are separately extruded and subsequently press-attached to each other, durability of the interface between the tread rubber and the side rubber is considerably improved, and thereby a possibility that the tread rubber and the side rubber are separated from each other (i.e., a possibility of crack generation) at the interface therebetween can be significantly lowered.

The production method of the pneumatic tire, according to claim 2 is a production method of the pneumatic tire according to claim the method comprising: a tire-case-molding process in which a carcass is wound around a rotary drum capable of expanding its diameter, and a bead section forming member is attached to the carcass, so as to mold a case; and a tire-contour-molding process in which the tread rubber in an unvulcanized state, to each outer end portion thereof in a widthwise direction of the tire the side rubber in an unvulcanized state has been attached, is attached on the outer side, in a radial direction of the tire, of the carcass which forms the case, the side wall rubber in an unvulcanized state is attached to each of side portions of the carcass, which side portions are outer portions of the carcass in the widthwise direction of the tire, and each outer end portion of the side wall rubber in the radial direction of the tire is attached to each outer end portion of the side rubber in the widthwise direction of the tire, so as to mold a contour of the tire.

Next, the operation and effects of the production method of the pneumatic tire according to claim 2 will be described.

In the tire-case-molding process, a carcass is wound around a rotary drum capable of expanding its diameter, and a bead section forming member is attached to the carcass, so as to mold a case. At this stage, the side wall rubber has not been attached to the carcass, and thus the case does not include the side wall rubber.

In the tire-contour-molding process, the tread rubber in an unvulcanized state, to each outer end portion thereof in a widthwise direction of the tire the side rubber in an unvulcanized state has been attached, is attached on the outer side, in a radial direction of the tire, of the carcass which forms the case.

Here, the tread rubber and the side rubber may be integrally extruded by an extruder such that the side rubber is attached to each outer end portion of the tread rubber in the widthwise direction of the tire. Alternatively, the tread rubber and the side rubber may be separately extruded by different extruders, and thereafter respective surfaces to be bonded of the tread rubber and the side rubber are cut and melted by a heated blade so as to be then attached to each other.

Further, the side wall rubber in an unvulcanized state is attached to each of side portions of the carcass, which side portions are outer portions of the carcass in the widthwise direction of the tire, and each outer end portion of the side wall rubber in the radial direction of the tire is attached to each outer end portion of the side rubber in the widthwise direction of the tire.

The side wall rubber is preferably attached to the side rubber by, for example, cement rubber.

Other processes required for the production method of the pneumatic tire are the same as conventionally known processes.

Through the above-described tire-contour-molding process, a contour of the tire is molded, and a green tire is produced.

The green tire is vulcanized by using a vulcanization mold in a vulcanization process so as to produce the pneumatic tire according to claim 1.

According to the production method of the pneumatic tire of the present invention, a pneumatic tire can be produced a possibility that the side rubber and the side wall rubber are separated from each other (i.e., a possibility of crack generation) at the interface therebetween is significantly lowered.

The production method of the pneumatic tire, according to claim 3 is a production method of the pneumatic tire according to claim 1, the method comprising: a tire-case-molding process in which a carcass is wound around a rotary drum capable of expanding its diameter, a bead section forming member is attached to the carcass, attachment preventing sheets are respectively stuck on portions of the carcass, on each of which portions of the carcass the outer end portion, in a radial direction of the tire, of the side wall rubber to be attached to the carcass and the bead section forming member is positioned, and the side wall rubber in an unvulcanized state is attached to the carcass and the bead section forming member such that each outer end portion of the side wall rubber in the radial direction of the tire is positioned on the corresponding attachment preventing sheet, so as to mold a case; and a tire-contour-molding process in which each outer end portion of the side wall rubber in the radial direction of the tire is pulled up outwardly, the tread rubber in an unvulcanized state, to each outer end portion thereof in a widthwise direction of the tire the side rubber in an unvulcanized state has been attached, is attached on the outer side of the carcass in the radial direction of the tire, and each outer end portion of the side wall rubber in the radial direction of the tire is attached to the corresponding outer end portion of the side rubber in the widthwise direction of the tire, so as to mold a contour of the tire.

Next, the operation and effects of the production method of the pneumatic tire according to claim 3 will be described.

In the tire-case-molding process, a carcass is wound around a rotary drum capable of expanding its diameter.

Then, a bead section forming member is attached to the carcass, attachment preventing sheets are respectively stuck on portions of the carcass, on each of which portions of the carcass the outer end portion, in a radial direction of the tire, of the side wall rubber to be attached to the carcass and the bead section forming member is positioned, and the side wall rubber in an unvulcanized state is attached to the carcass and the bead section forming member such that each outer end portion of the side wall rubber in the radial direction of the tire is positioned on the corresponding attachment preventing sheet.

Here, since each outer end portion of the side wall rubber in the radial direction of the tire is positioned on the attachment preventing sheet, the portion is not attached to the carcass.

Through the above-described tire-case-molding process, a tire case is molded.

Next, in the tire-contour-molding process, the attachment preventing sheets are removed from the tire case on the rotary drum, and each outer end portion of the side wall rubber in the radial direction of the tire is pulled up outwardly.

Further, the tread rubber in an unvulcanized state, to each outer end portion thereof in a widthwise direction of the tire the side rubber in an unvulcanized state has been attached, is attached on the outer side of the carcass in the radial direction of the tire.

Here, the tread rubber and the side rubber may be integrally extruded by an extruder such that the side rubber is attached to each outer end portion of the tread rubber in the widthwise direction of the tire. Alternatively, the tread rubber and the side rubber may be separately extruded by different extruders, and thereafter respective surfaces to be bonded of the tread rubber and the side rubber are cut and melted by a heated blade so as to be then attached to each other.

After the tread rubber and the side rubber have been attached to the carcass, each outer end portion of the side wall rubber in the radial direction of the tire is attached to the corresponding outer end portion of the side rubber in the widthwise direction of the tire.

The side wall rubber is preferably attached to the side rubber by, for example, cement rubber.

Through the above-described tire-contour-molding process, a contour of the tire is molded, and a green tire is produced.

The green tire is vulcanized by using a vulcanization mold in a vulcanization process so as to produce the pneumatic tire according to claim 1.

According to the production method of the pneumatic tire of the present invention, a pneumatic tire can be produced a possibility that the side rubber and the side wall rubber are separated from each other (i.e., a possibility of crack generation) at the interface therebetween is significantly lowered.

In the production method of the pneumatic tire, according to claim 4, the tread rubber and the side rubber are integrally extruded in an unvulcanized state by an extruder.

Next, the operation and effects of the production method of the pneumatic tire according to claim 4 will be described.

Preferably, the tread rubber and the side rubber are integrally extruded in the unvulcanized state by an extruder.

In this case in which the tread rubber and the side rubber are integrally extruded in the unvulcanized state by an extruder, as compared with a case in which the tread rubber and the side rubber are separately extruded and subsequently attached to each other, durability of the interface between the tread rubber and the side rubber is improved, and thereby a possibility that the tread rubber and the side rubber are separated from each other (i.e., a possibility of crack generation) at the interface therebetween can be significantly lowered.

### Brief Description of the Drawings

Fig. 1 is a partially sectional view of a pneumatic tire according to an embodiment of the present invention.
Fig. 2 is a process drawing showing a production method of the pneumatic tire according to an embodiment of the present invention.
Fig. 3 is a process drawing showing another production method of the pneumatic tire according to an embodiment of the present invention.
Fig. 4A is a partially sectional view of a pneumatic tire of Related art 1.
Fig. 4B is a partially sectional view of a pneumatic tire of Related art 2.
Fig. 4C is a partially sectional view of the pneumatic tire of the present invention.

### Most Preferred Embodiments for Implementing the Invention

Hereinafter, a pneumatic tire according to an embodiment of the present invention will be described with reference to the attached drawings.

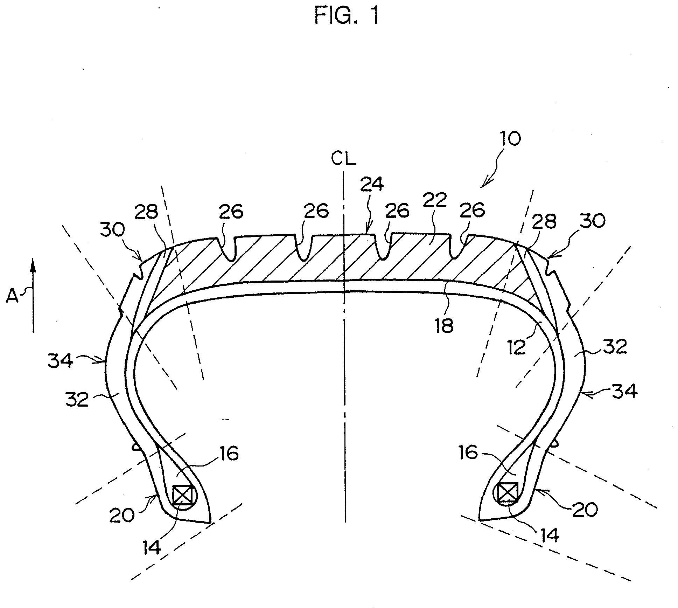

As shown in Fig. 1, a pneumatic tire 10 includes an inner liner rubber 12.

A pair of right and left bead cores 14 are disposed on the outer side of the inner liner rubber 12. The bead core 14 is composed of plural bead wires and included by a bead filler 16.

A carcass 18 of a toroidal shape straddles on the bead cores 14 and the bead fillers 16. Ends of the carcass 18 in the radial direction of the tire are bent substantially toward the outer side in the radial direction of the tire (i.e., toward the side indicated by Arrow A in Fig. 1) so as to respectively envelop the bead cores 14 and the bead fillers 16. In this way, bead sections 20 are formed.

A belt (not shown) is disposed on the outer side of the carcass 18 in the radial direction of the tire.

A tread rubber 22 (i.e., a hatched portion in Fig. 1) is attached on the outer side of the belt in the radial direction of the tire. Shore hardness of the tread rubber 22 is 68, and the blend ratio thereof, of SBR/NR/BR(PHR), is 100/0/0.

A tread section 24 is formed by the tread rubber 22. Further, plural circumferential grooves 26 extending in the circumferential direction of the tire are formed on a surface of the tread section 24.

A side rubber 28 is attached to each outer end portion of the tread rubber 22 in the widthwise direction of the tire. Shore hardness of the side rubber 28 is 55, and the blend ratio thereof, of SBR/NR/BR(PHR), is 0/50/50. A portion of a shoulder section 30 is formed by the side rubber 28.

A side wall rubber 32 is press-attached to each of side portions of the carcass 18, which side portions are outer portions of the carcass 18 in the widthwise direction of the tire. Shore hardness of the side wall rubber 32 is 55, and the blend ratio thereof, of SBR/NR/BR(PHR), is 0/50/50. An outer end portion of the side wall rubber 32 in the radial direction of the tire is attached to an outer end portion of the side rubber 28 in the widthwise direction of the tire.

A side wall section 34 and a portion of the shoulder section 30 are formed by the side wall rubber 32 on each side of the tire.

In the present embodiment, the side rubber 28 and the side wall rubber 32 have the same physical properties and composition. However, it suffices that the side rubber 28 and the side wall rubber 32 have similar composition, and the physical properties or composition of the two rubbers are not necessarily the same.

Next, a first production method of the pneumatic tire 10 will be described.

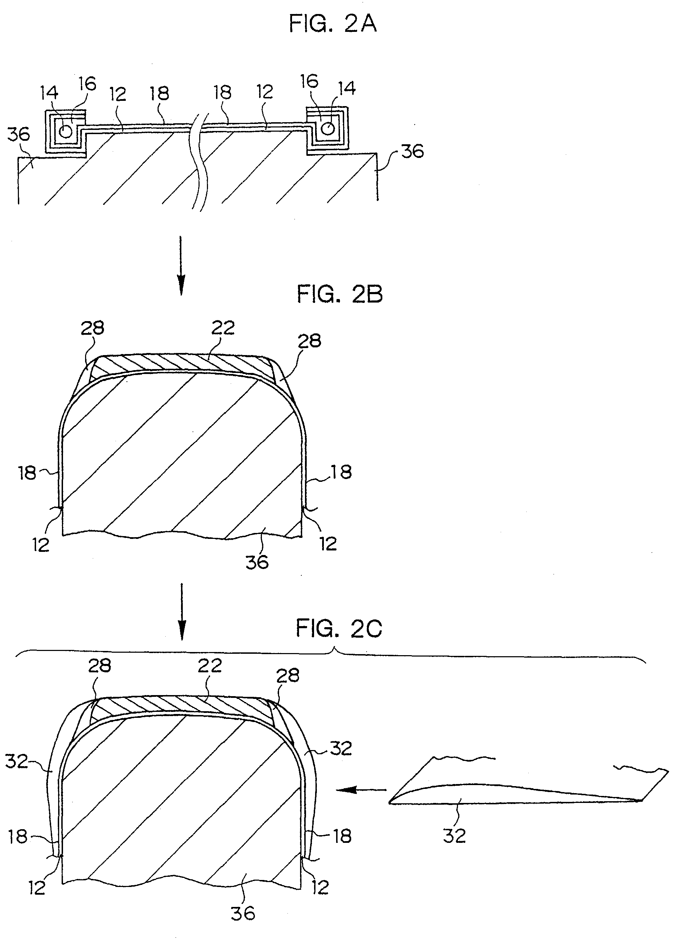

First, in a tire-case-molding process, as shown in Fig. 2A, an unvulcanized inner liner rubber 12 is wound around a rotary drum 36 whose diameter-expandable portion is in a state of relatively small diameter.

Then, a carcass (ply) 18 is wound around the inner liner rubber 12.

Cement rubber is attached to the carcass 18, and the carcass 18 is attached to the inner liner rubber 12 due to adhesive force of the cement rubber.

A bead filler (a bead section forming member) 16 including a bead core (a bead section forming member) 14 is disposed at each end of the carcass 18, and the ends of the carcass 18 are bent to mold bead sections 20.

Through the above-described tire-case-molding process, a case is molded.

Next, in a tire-contour-molding process, as shown in Fig. 2B, the diameter of the rotary drum 36 is expanded by a bladder (not shown) provided therein, and thereby the carcass 18 is toroidally curved. Then, a belt (not shown) is disposed on the outer side, in the radial direction of the tire, of the carcass 18, which forms the case.

After that, an unvulcanized tread rubber 22, to each outer end portion thereof in the widthwise direction of the tire an unvulcanized side rubber 28 has been attached, is attached on the outer side of the belt in the radial direction of the tire, so as to mold a tread section 24 and a portion of a shoulder section 30 on each side of the tire.

Cement rubber is attached to the tread rubber 22 and the side rubber 28, and the tread rubber 22 and the side rubber 28 are attached to the belt and the carcass 18 due to adhesive force of the cement rubber.

Here, the tread rubber 22 and the side rubber 28 are integrally extruded by an extruder (not shown) such that the side rubber 28 is attached to each outer end portion of the tread rubber 22 in the widthwise direction of the tire.

As the extruder, a dual tuber (DT), which is conventionally known, is used and by which, the tread rubber 22 and the side rubber 28 that are separately supplied are integrally extruded via a mouth piece portion (not shown) such that the side rubber 28 is attached to each side of the tread rubber 22.

Alternatively, the tread rubber 22 and the side rubber 28 may be separately extruded by different extruders (not shown), and thereafter respective surfaces to be bonded of the tread rubber 22 and the side rubber 28 are cut and melted by a heated blade so as to be then attached to each other.

Finally, as shown in Fig. 2C, an unvulcanized side wall rubber 32 is attached to each of side portions of the carcass 18, which side portions are outer portions of the carcass 18 in the widthwise direction of the tire, and each outer end portion of the side wall rubber 32 in the radial direction of the tire is attached to the corresponding outer end portion of the side rubber 28 in the widthwise direction of the tire, so as to mold a portion of the shoulder section 30 and a side wall section 34 on each side of the tire.

The side wall rubber 32 is attached to the side rubber 28 and the carcass 18 by, for example, cement rubber.

Through the above-described tire-contour-molding process, a contour of the pneumatic tire 10 is molded, and a green tire is produced.

The green tire is vulcanized by using a vulcanization mold in a vulcanization process so as to produce the pneumatic tire 10 of the present invention.

Next, a second production method of the pneumatic tire 10 will be described.

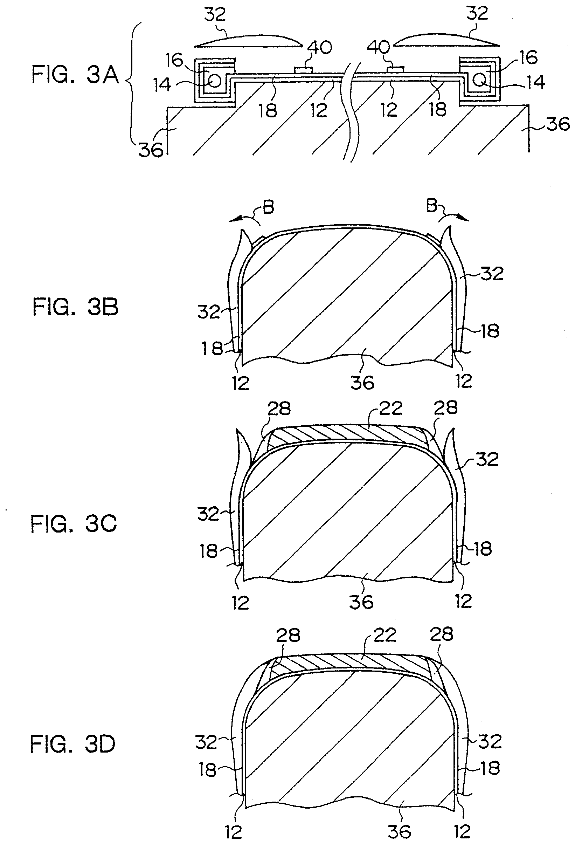

First, in a tire-case-molding process, as shown in Fig. 3A, an unvulcanized inner liner rubber 12 is wound around a rotary drum 36 whose diameter-expandable portion is in a state of relatively small diameter.

Then, a carcass 18 is wound around the inner liner rubber 12. Cement rubber is attached to the carcass 18, and the carcass 18 is attached to the inner liner rubber 12 due to adhesive force of the cement rubber.

A bead filler (a bead section forming member) 16 including a bead core (a bead section forming member) 14 is disposed at each end of the carcass 18, and the ends of the carcass 18 are bent to mold bead sections 20.

Thereafter, attachment preventing sheets (e.g., polysheets) 40 are respectively stuck on portions of the carcass 18, on each of which portions of the carcass 18 an outer end portion of a side wall rubber 32 in the radial direction of the tire is positioned.

Then, an unvulcanized side wall rubber 32 is attached to each side of the carcass 18 such that each outer end portion of the side wall rubber 32 in the radial direction of the tire is positioned on the corresponding attachment preventing sheet 40, so as to mold a portion of a shoulder section 30 and a side wall section 34 on each side of the tire.

Cement rubber is attached to the side wall rubber 32, and the side wall rubber 32 is attached to the carcass 18 due to adhesive force of the cement rubber.

Here, since each outer end portion of the side wall rubber 32 in the radial direction of the tire is positioned on the attachment preventing sheet 40, the portion is not attached to the carcass 18.

Through the above-described tire-case-molding process, a case is molded.

Next, in a tire-contour-molding process, as shown in Fig. 3B, the diameter of the rotary drum 36 is expanded by a bladder (not shown) provided therein, and thereby the carcass 18 is toroidally curved.

Then, the attachment preventing sheets 40 are removed from the rotary drum 36, and each outer end portion of the side wall rubber 32 in the radial direction of the tire is pulled up outwardly (i.e., in the direction of Arrow B in Fig. 3B).

Thereafter, a belt (not shown) is attached on the outer side of the carcass 18 in the radial direction of the tire.

After that, as shown in Fig. 3C, an unvulcanized tread rubber 22, to each outer end portion thereof in the widthwise direction of the tire an unvulcanized side rubber 28 has been attached, is attached on the outer side of the belt in the radial direction of the tire, so as to mold a tread section 24 and a portion of the shoulder section 30 on each side of the tire.

Cement rubber is attached to the tread rubber 22 and the side rubber 28, and the tread rubber 22 and the side rubber 28 are attached to the belt and the carcass 18 due to adhesive force of the cement rubber.

Here, the tread rubber 22 and the side rubber 28 are integrally extruded by an extruder (not shown) such that the side rubber 28 is attached to each outer end portion of the tread rubber 22 in the widthwise direction of the tire.

As the extruder, a dual tuber (DT), which is conventionally known, is used and by which, the tread rubber 22 and the side rubber 28 that are separately supplied are integrally extruded via a mouth piece portion (not shown) such that the side rubber 28 is attached to each side of the tread rubber 22.

Alternatively, the tread rubber 22 and the side rubber 28 may be separately extruded by different extruders (not shown), and thereafter respective surfaces to be bonded of the tread rubber 22 and the side rubber 28 are cut and melted by a heated blade so as to be then attached to each other.

Finally, as shown in Fig. 3D, after the tread rubber 22 and the side rubber 28 have been attached to the carcass 18, each outer end portion of the side wall rubber 32 in the radial direction of the tire is attached to each outer end portion of the side rubber 28 in the widthwise direction of the tire.

The side wall rubber 32 is preferably attached to the side rubber 28 by, for example, cement rubber.

Through the above-described tire-contour-molding process, a contour of the tire is molded, and a green tire is produced.

The green tire is vulcanized by using a vulcanization mold in a vulcanization process so as to produce the pneumatic tire 10 of the present invention.

Next, the operation and effects of the pneumatic tire 10 will be described.

In the pneumatic tire 10 of the present invention, an interface between the side rubber 28 and the side wall rubber 32 appears, not at a side surface side of the tire, but at a ground-contacting side thereof.

Here, while the vehicle is running, bending deformation of the tire is larger at the side surface sides of the tire than at the ground-contacting side thereof. Namely, the side surface portions of the tire are high distortion portions.

Therefore, the pneumatic tire 10 of the present invention is structured such that the interface between the side rubber 28 and the side wall rubber 32 appears, not at the side surface side of the tire, but at the ground-contacting side (i.e., low distortion portion) thereof. As a result, the bending deformation acting at the interface between the side rubber 28 and the side wall rubber 32 can be reduced, and thereby separation of the side rubber 28 and the side wall rubber 32 from each other (i.e., cracks) at the interface can be prevented.

In other words, the interface between the side rubber 28 and the side wall rubber 32 is positioned at the ground-contacting portion of the tire, which portion is a low distortion portion, so that separation of the side rubber 28 and the side wall rubber 32 from each other (i.e., cracks) at the interface can be prevented.

Further, since the side rubber 28 and the side wall rubber 32 have the same composition and, preferably, physical properties, a possibility that the side rubber 28 and the side wall rubber 32 are separated from each other (i.e., a possibility of crack generation) at the interface therebetween can be significantly lowered.

Further, since the tread rubber 22 and the side rubber 28 to be used are integrally extruded in the unvulcanized state by an extruder, as compared with the case in which the tread rubber 22 and the side rubber 28 are separately extruded and subsequently press-attached to each other, durability of an interface between the tread rubber 22 and the side rubber 28 is considerably improved, and thereby a possibility that the tread rubber 22 and the side rubber 28 are separated from each other (i.e., a possibility of crack generation) at the interface therebetween can be significantly lowered.

As described above, in the pneumatic tire 10 of the present invention, separation of the tread rubber 22 and the side rubber 28 from each other (i.e., cracks) at the interface therebetween can be prevented, and separation of the side rubber 28 and the side wall rubber 32 from each other (i.e., cracks) at the interface therebetween can also be prevented.

### (Test Example)

Next, a durability test for examining crack generation was conducted by using the pneumatic tires of the present invention and other tires.

The size of the tires used for the test was PCR225/45R17. The tires of this size were respectively assembled with rims each having a rim width of 8J. Each internal pressure was set to 200 KPa.

These tires assembled with the rims were respectively mounted to domestic midsize sedans. After driving with a load, which is equivalent to two occupants, on roads whose road surface conditions were set so as to include 30 % of general road, 50 % of highway and 20 % of rough road, crack generation was visually checked by an operator.

Here, Related art 1 which was tested in the present test example is a pneumatic tire 50 in which, as shown in Fig. 4A, a side rubber is not attached to a tread rubber 52, and a side wall rubber 54 is directly attached to each outer end portion of the tread rubber 52 in the widthwise direction of the tire.

Thus, Related art 1 has a single-tread structure. In Related art 1, the tread rubber 52 is attached on the outer side of a carcass (not shown) in the radial direction of the tire, and then the side wall rubber 54 is attached to each of side portions of the carcass.

As shown in Table 2 below, Shore hardness of the tread rubber 52 is 68, and the blend ratio thereof, of SBR/NR/BR(PHR), is 100/0/0.

Further, Shore hardness of the side wall rubber 54 is 55, and the blend ratio thereof, of SBR/NR/BR(PHR), is 0/50/50.

Related art 2 is the pneumatic tire 70 in which, as described in the above "Background Art" section (see Fig. 4B), the side rubber 74 is attached to each outer end portion of the tread rubber 72 in the widthwise direction of the tire, and each outer end portion of the side wall rubber 76 in the radial direction of the tire is positioned on the lower side (i.e., the inner side in the radial direction of the tire) of the tread rubber 72 and the side rubber 74.

Thus, Related art 2 has a dual-tread structure, in which the tread rubber 72 and the side rubber 74 are integrally molded. In Related art 2, the side wall rubber 76 is first attached to each of the side portions of the carcass, and then the tread rubber 72 integrated with the side rubber 74 at each end thereof is attached on the outer side of the carcass in the radial direction of the tire.

As shown in Table 2 below, Shore hardness of the tread rubber 72 is 68, and the blend ratio thereof, of SBR/NR/BR(PHR), is 100/0/0.

Further, Shore hardness of the side wall rubber 76 and the side rubber 74 is 55, and the blend ratio thereof, of SBR/NR/BR(PHR), is 0/50/50.

The present invention is realized by the pneumatic tire 10 in which, as shown in Figs. 1 and 4C, the side rubber 28 is attached to each outer end portion of the tread rubber 22 in the widthwise direction of the tire, and each outer end portion of the side wall rubber 32 in the radial direction of the tire is attached to the corresponding outer end portion of the side rubber 28 in the widthwise direction of the tire.

Thus, the present invention has a dual-tread structure, in which the tread rubber 22 and the side rubber 28 are integrally molded. In the present invention, the tread rubber 22 integrated with the side rubber 28 at each end thereof is attached on the outer side of the carcass in the radial direction of the tire, and then the side wall rubber 32 is attached to each of side portions of the carcass.

As shown in Table 2 below, Shore hardness of the tread rubber 22 is 68, and the blend ratio thereof, of SBR/NR/BR(PHR), is 100/0/0.

Further, Shore hardness of the side wall rubber 32 and the side rubber 28 is 55, and the blend ratio thereof, of SBR/NR/BR(PHR), is 0/50/50.

**Table 1**

| | Related art 1 | Related art 2 | Present invention |
|---|---|---|---|
| Tread structure | Single-tread | Dual-tread | Dual-tread |
| Order of press-attaching side wall rubber | Attached after press-attachment of tread rubber | Attached before press-attachment of tread rubber | Attached after press-attachment of tread rubber |
| Crack generation (Durability test) | Generated at interface between tread rubber and side wall rubber when wear rate was 75 % | Generated at interface between side rubber and side wall rubber when wear rate was 75 % | No crack was generated till wear rate reached 100 % |

**Table 2**

| | Tread rubber | Side wall rubber | Side rubber |
|---|---|---|---|
| HD (Shore hardness) | 68 | 55 | 55 |
| SBR/NR/BR(PHR) | 100/0/0 | 0/50/50 | 0/50/50 |

With regard to test results, as shown in Table 1 above, in Related art 1, cracks were generated at the interface between the tread rubber 52 and the side wall rubber 54 when the wear rate was 75 %.

In Related art 2, cracks were generated at the interface between the side rubber 74 and the side wall rubber 76 when the wear rate was 75 %.

In the present invention, no cracks were generated even when the wear rate was 100 %.

As shown above, it was proved that no separation (i.e., cracks) occurred at the interface even when the wear rate is 100 % in the pneumatic tire of the present invention.

### Industrial Applicability

As described above, the pneumatic tire according to the present invention is preferably applied to vehicles such as a passenger car, and is suitable for a case where separation of the tread rubber and the side rubber from each other (i.e., cracks) at the interface therebetween is to be prevented and separation of the side rubber and the side wall rubber from each other (i.e., cracks) at the interface therebetween is also to be prevented.

Further, the production method of the pneumatic tire according to the present invention is suitable for a case where a pneumatic tire is produced, in which tire separation of the tread rubber and the side rubber from each other (i.e., cracks) at the interface therebetween is significantly prevented and separation of the side rubber and the side wall rubber from each other (i.e., cracks) at the interface therebetween is also significantly prevented.

## Claims

1. A pneumatic tire including a pair of right and left bead cores (14), and a carcass (18) toroidally straddling the bead cores (14), said pneumatic tire comprising:
a tread rubber (22) which forms a tread section (24), the tread rubber (22) being disposed on the outer side of the carcass (18) in a radial direction of the tire;
a side rubber (28) which forms a portion of each shoulder section (30), the side rubber (28) being attached to each outer end portion of the tread rubber (22) in a widthwise direction of the tire; and
a side wall rubber (32) which forms each side wall section (34) and a portion of each shoulder section (30), each side wall rubber (32) being disposed on the outer side of the carcass (18) in the widthwise direction of the tire, and each outer end portion of the side wall rubber (32) in the radial direction of the tire being attached to each outer end portion of the side rubber (28) in the widthwise direction of the tire,
**characterized in that**:
the side rubber (28) and the side wall rubber (32) are a blend of 0 PHR of styrene-butadiene rubber (SBR), 50 PHR natural rubber (NR), and 50 PHR polybutadiene rubber (BR);
the tread rubber (22) is a blend of 100 PHR of SBR, 0 PHR NR and 0 PHR BR; and
the Shore hardnessses of the tread rubber (22), side wall rubber (32) and side rubber (28) are 68, 55 and 55 respectively.

2. A production method of the pneumatic tire according to claim 1, said method comprising:
a tire-case-molding process in which a carcass (18) is wound around a rotary drum (36) capable of expanding its diameter, and a bead section forming member (14,16) is attached to the carcass, so as to mold a case; and
a tire-contour-molding process in which the tread rubber (22) in an unvulcanized state, to each outer end portion thereof in a widthwise direction of the tire the side rubber (28) in an unvulcanized state has been attached, is attached on the outer side, in a radial direction of the tire, of the carcass (18) which forms the case, the side wall rubber (32) in an unvulcanized state is attached to each of side portions of the carcass (18), which side portions are outer portions of the carcass in the widthwise direction of the tire, and each outer end portion of the side wall rubber (32) in the radial direction of the tire is attached to each outer end portion of the side rubber (28) in the widthwise direction of the tire, so as to mold a contour of the tire.

3. A production method of the pneumatic tire according to claim 1, said method comprising:
a tire-case-molding process in which a carcass (18) is wound around a rotary drum (36) capable of expanding its diameter, a bead
section (14, 16) forming member is attached to the carcass (18), attachment preventing sheets are respectively stuck on portions of the carcass (18), on each of which portions of the carcass (18) the outer end portion, in a radial direction of the tire, of the side wall rubber (32) to be attached to the carcass (18) and the bead section forming member (14, 16) is positioned, and the side wall rubber (32) in an unvulcanized state is attached to the carcass (18) and the bead section forming member (14, 16) such that each outer end portion of the side wall rubber (32) in the radial direction of the tire is positioned on the corresponding attachment preventing sheet, so as to mold a case; and
a tire-contour-molding process in which each outer end portion of the side wall rubber (32) in the radial direction of the tire is pulled up outwardly, the tread rubber (32) in an unvulcanized state, to each outer end portion thereof in a widthwise direction of the tire the side rubber (28) in an unvulcanized state has been attached, is attached on the outer side of the carcass (18) in the radial direction of the tire, and each outer end portion of the side wall rubber (32) in the radial direction of the tire is attached to the corresponding outer end portion of the side rubber (28) in the widthwise direction of the tire, so as to mold a contour of the tire.

4. A production method of the pneumatic tire, according to claim 2 or 3, wherein the tread rubber (32) and the side rubber (28) are integrally extruded in an unvulcanized state by an extruder.

## Patentansprüche

1. Luftreifen, der ein Paar aus rechtem und linkem Wulstkern (14) und eine Karkasse (18), welche die Wulstkerne (14) kreisringförmig überspannt, einschließt, wobei der Luftreifen Folgendes umfasst:
einen Laufflächengummi (22), der eine Laufflächensektion (24) bildet, wobei der Laufflächengummi (22) auf der äußeren Seite der Karkasse (18) in einer Radialrichtung des Reifens angeordnet ist,
einen Seitengummi (28), der einen Abschnitt jeder Schultersektion (30) bildet, wobei der Seitengummi (28) an jedem äußeren Endabschnitt des Laufflächengummis (22) in einer Breitenrichtung des Reifens befestigt ist, und
einen Seitenwandgummi (32), der jede Seitenwandsektion (34) und einen Abschnitt jeder Schultersektion (30) bildet, wobei jeder Seitenwandgummi (32) auf der äußeren Seite der Karkasse (18) in der Breitenrichtung des Reifens angeordnet ist und jeder äußere Endabschnitt des Seitenwandgummis (32) in der Radialrichtung des Reifens an jedem Endabschnitt des Seitengummis (28) in der Breitenrichtung des Reifens befestigt ist,
**dadurch gekennzeichnet, dass**:
der Seitengummi (28) und der Seitenwandgummi (32) ein Gemisch von 0 PHR Styrol-Butadien-Kautschuk (SBR), 50 PHR Naturkautschuk (NR) und 50 PHR Polybutadien-Kautschuk (BR) sind,
der Laufflächengummi (22) ein Gemisch von 100 PHR SBR, 0 PHR NR und 0 PHR BR ist und
die Shore-Härten des Laufflächengummis (22), des Seitenwandgummis (32) und des Seitengummis (28) jeweils 68, 55 beziehungsweise 55 betragen.

2. Verfahren zur Herstellung des Luftreifens nach Anspruch 1, wobei das Verfahren Folgendes umfasst:
einen Reifendecke-Formvorgang, in dem eine Karkasse (18) um eine Drehtrommel (36), die dazu in der Lage ist, ihren Durchmesser auszudehnen, gewickelt wird und ein Wulstsektion-Formelement (14, 16) an der Karkasse befestigt wird, um so eine Decke zu formen, und
einen Reifenumriss-Formvorgang, in dem der Laufflächengummi (22) in einem nichtvulkanisierten Zustand, wobei an jedem äußeren Endabschnitt desselben in einer Breitenrichtung des Reifens der Seitengummi (28) in einem nichtvulkanisierten Zustand befestigt worden ist, an der äußeren Seite, in einer Radialrichtung des Reifens, der Karkasse (18), welche die Decke bildet, befestigt wird, der Seitenwandgummi (32) in einem nichtvulkanisierten Zustand an jedem der Seitenabschnitte der Karkasse (18) befestigt wird, wobei die Seitenabschnitte äußere Abschnitte der Karkasse in der Breitenrichtung des Reifens sind, und jeder äußere Endabschnitt des Seitenwandgummis (32) in der Radialrichtung des Reifens an jedem Endabschnitt des Seitengummis (28) in der Breitenrichtung des Reifens befestigt wird, um so einen Umriss des Reifens zu bilden.

3. Verfahren zur Herstellung des Luftreifens nach Anspruch 1, wobei das Verfahren Folgendes umfasst:
einen Reifendecke-Formvorgang, in dem eine Karkasse (18) um eine Drehtrommel (36), die dazu in der Lage ist, ihren Durchmesser auszudehnen, gewickelt wird, ein Wulstsektion-Formelement (14, 16) an der Karkasse (18) befestigt wird, Haftungsverhinderungsbahnen jeweils an Abschnitten der Karkasse (18) angeheftet werden, wobei an jedem der Abschnitte der Karkasse (18) der äußere Endabschnitt des Seitenwandgummis (32), in einer Radialrichtung des Reifens, der an der Karkasse (18) und dem Wulstsektion-Formelement (14, 16) befestigt werden soll, angeordnet wird, und der Seitenwandgummi (32) in einem nichtvulkanisierten Zustand derart an der Karkasse (18) und dem Wulstsektion-Formelement (14, 16) befestigt wird, dass jeder äußere Endabschnitt des Seitenwandgummis (32) in der Radialrichtung des Reifens auf der entsprechenden Haftungsverhinderungsbahn angeordnet wird, um so eine Decke zu formen, und
einen Reifenumriss-Formvorgang, in dem jeder äußere Endabschnitt des Seitenwandgummis (32) in der Radialrichtung des Reifens nach außen hochgezogen wird, der Laufflächengummi (22) in einem nichtvulkanisierten Zustand, wobei an jedem äußeren Endabschnitt desselben in einer Breitenrichtung des Reifens der Seitengummi (28) in einem nichtvulkanisierten Zustand befestigt worden ist, an der äußeren Seite der Karkasse (18) in der Radialrichtung des Reifens befestigt wird, der Seitenwandgummi (32) in einem nichtvulkanisierten Zustand an jedem der Seitenabschnitte der Karkasse (18) befestigt wird und jeder äußere Endabschnitt des Seitenwandgummis (32) in der Radialrichtung des Reifens an dem entsprechenden Endabschnitt des Seitengummis (28) in der Breitenrichtung des Reifens befestigt wird, um so einen Umriss des Reifens zu bilden.

4. Verfahren zur Herstellung des Luftreifens, nach Anspruch 2 oder 3, wobei der Laufflächengummi (22) und der Seitengummi (28) integral in einem nichtvulkanisierten Zustand durch eine Strangpresse stranggepresst werden.

## Revendications

1. Pneumatique incluant une paire de tringles de talon gauche et droite (14), et une carcasse (18) qui chevauche de façon toroïdale les tringles de talon (14), ledit pneumatique comprenant :
un caoutchouc de bande de roulement (22) qui forme une section de bande de roulement (24), le caoutchouc de bande de roulement (22) étant disposé sur le côté externe de la carcasse (18), dans une direction radiale du pneumatique ;
un caoutchouc latéral (28) qui forme une partie de chaque section d'épaulement (30), le caoutchouc latéral (28) étant fixé à chaque partie d'extrémité externe du caoutchouc de bande de roulement (22), dans une direction de largeur du pneumatique ; et
un caoutchouc de paroi latérale (32) qui forme chaque section de paroi latérale (34) et une partie de chaque section d'épaulement (30), chaque caoutchouc de paroi latérale (32) étant disposé sur le côté externe de la carcasse (18), dans la direction de largeur du pneumatique, et chaque partie d'extrémité externe du caoutchouc de paroi latérale (32), dans la direction radiale du pneumatique, étant fixée à chaque partie d'extrémité externe du caoutchouc latéral (28), dans la direction de largeur du pneumatique ;
**caractérisé en ce que** :
le caoutchouc latéral (28) et le caoutchouc de paroi latérale (32) sont un mélange de 0 PHR de caoutchouc de styrène-butadiène (SBR), de 50 PHR de caoutchouc naturel (NR) et de 50 PHR de caoutchouc de polybutadiène (BR) ;
le caoutchouc de bande de roulement (22) est un mélange de 100 PHR de SBR, de 0 PHR de NR et 0 de PHR de Ber ; et
les duretés Shore du caoutchouc de bande de roulement (22), du caoutchouc de paroi latérale (32) et du caoutchouc latéral (28) sont respectivement de 68, 55 et 55.

2. Procédé de fabrication du pneumatique selon la revendication 1, ledit procédé comprenant :
un processus de moulage d'ébauche de pneumatique selon lequel une carcasse (18) est enroulée autour d'un tambour rotatif (36) qui dispose de la capacité d'élargir son diamètre, et un élément de formation de section de talon (14, 16) est fixé à la carcasse, de manière à mouler une ébauche ; et
un processus de moulage de contour de pneumatique selon lequel le caoutchouc de bande de roulement (22), dans un état non vulcanisé, à chaque partie d'extrémité externe duquel, dans une direction de largeur du pneumatique, le caoutchouc latéral (28), dans un état non vulcanisé, a été fixé, est fixé sur le côté externe, dans une direction radiale du pneumatique, de la carcasse (18), ce qui forme l'ébauche, le caoutchouc de paroi latérale (32), dans un état non vulcanisé, est fixé à chacune de parties latérales de la carcasse (18), lesquelles parties latérales sont des parties externes de la carcasse, dans la direction de largeur du pneumatique, et chaque partie d'extrémité externe du caoutchouc de paroi latérale (32), dans la direction radiale du pneumatique, est fixée à chaque partie d'extrémité externe du caoutchouc latéral (28), dans la direction de largeur du pneumatique, de manière à mouler un contour du pneumatique.

3. Procédé de fabrication du pneumatique selon la revendication 1, ledit procédé comprenant :
un processus de moulage d'ébauche de pneumatique selon lequel une carcasse (18) est enroulée autour d'un tambour rotatif (36) qui dispose de la capacité d'élargir son diamètre, un élément de formation de section de talon (14, 16) est fixé à la carcasse (18), des feuilles d'empêchement de fixation sont respectivement collées sur des parties de la carcasse (18), parties de la carcasse (18) sur chacune desquelles la partie d'extrémité externe, dans une direction radiale du pneumatique, du caoutchouc de paroi latérale (32) qui doit être fixé à la carcasse (18) et à l'élément de formation de section de talon (14, 16) est positionnée, et le caoutchouc de paroi latérale (32), dans un état non vulcanisé, est fixé à la carcasse (18) et à l'élément de formation de section de talon (14, 16) de telle sorte que chaque partie d'extrémité externe du caoutchouc de paroi latérale (32), dans la direction radiale du pneumatique, soit positionnée sur la feuille d'empêchement de fixation correspondante, de manière à mouler une ébauche ; et
un processus de moulage de contour de pneumatique selon lequel chaque partie d'extrémité externe du caoutchouc de paroi latérale (32), dans la direction radiale du pneumatique, est tirée vers le haut et vers l'extérieur, le caoutchouc de bande de roulement (32), dans un état non vulcanisé, à chaque partie d'extrémité externe duquel, dans une direction de largeur du pneumatique, le caoutchouc latéral (28), dans un état non vulcanisé, a été fixé, est fixé sur le côté externe de la carcasse (18), dans la direction radiale du pneumatique, et chaque partie d'extrémité externe du caoutchouc de paroi latérale (32), dans la direction radiale du pneumatique, est fixée à la partie d'extrémité externe correspondante du caoutchouc latéral (28), dans la direction de largeur du pneumatique, de manière à mouler un contour du pneumatique.

4. Procédé de fabrication du pneumatique, selon la revendication 2 ou 3, dans lequel le caoutchouc de bande de roulement (32) et le caoutchouc latéral (28) sont extrudés de façon solidaire, dans un état non vulcanisé, au moyen d'une extrudeuse.
